# EUROPEAN PATENT APPLICATION

(11) **EP 3 951 710 A1**
(43) Date of publication of application: **09.02.2022**
(21) Application number: 20784278.2
(22) Date of filing: 16.01.2020
(51) Int. Cl.: G06T 7/00, G06N 20/00

(54) **IMAGE PROCESSING DEVICE, METHOD FOR OPERATION OF IMAGE PROCESSING DEVICE, AND PROGRAM FOR OPERATION OF IMAGE PROCESSING DEVICE**

(30) Priority: 29.03.2019 JP 2019067742
(71) Applicant: FUJIFILM Corporation, Tokyo 106-8620 (JP)
(72) Inventor: WAKUI, Takashi, Ashigarakami-gun, Kanagawa 258-8538 (JP)
(74) Representative: Klunker IP Patentanwälte PartG mbB
(86) International application number: PCT/JP2020/001262
(87) International publication number: WO 2020/202700

(57) **Abstract**

There is provided an image processing apparatus including: a display control unit that performs a control for displaying a learning input image which is input, as learning data, to a segmentation model for performing semantic segmentation, which determines a plurality of classes in an image in units of pixels; a reception unit that receives, for each of a plurality of estimated regions which are estimated as different classes in the learning input image, an input of a marker having a size smaller than a size of the estimated region; a calculation unit that calculates feature quantities for each of a plurality of partitions in the learning input image; a classification unit that classifies a plurality of the feature quantities for each of the plurality of partitions into clusters for at least the number of the estimated regions; and a generation unit that generates an annotation candidate image in which a classification result of the clusters is reflected in the learning input image so as to be identified.

## Description

### BACKGROUND OF THE INVENTION

### 1. Field of the Invention

A technique of the present disclosure relates to an image processing apparatus, an operation method of the image processing apparatus, and an operation program of the image processing apparatus.

### 2. Description of the Related Art

There is known semantic segmentation which determines a plurality of classes in an image in units of pixels. The semantic segmentation is realized by a machine learning model (hereinafter, simply referred to as a segmentation model) such as a U-shaped convolutional neural network (U-Net, U-shaped neural network).

The class may be referred to as a type of an object that appears in the input image. Further, in short, the semantic segmentation is a technique of determining a class and a contour of an object appearing in an input image. The segmentation model outputs, as an output image, determination results of the class and the contour of the object. For example, in a case where three objects of a cup, a book, and a mobile phone appear in an input image, in an output image, ideally, each of the cup, the book, and the mobile phone is determined as a class, and contour lines that faithfully trace contours of these objects are drawn on each object.

As described in JP2016-534709A, in order to improve a determination accuracy of the segmentation model, it is necessary to update the segmentation model by inputting learning data to the segmentation model and learning the learning data. The learning data includes a learning input image and an annotation image in which a label of a class in the learning input image is designated.

### SUMMARY OF THE INVENTION

The label designation of all classes of the annotation image is manually performed. As a result, it takes a lot of time and effort to generate the annotation image.

An object of the technique of the present disclosure is to provide an image processing apparatus, an operation method of the image processing apparatus, and an operation program of the image processing apparatus capable of easily generating an annotation image, which is input as learning data to a segmentation model for performing semantic segmentation, in a short time as compared with a case where an annotation image is manually generated.

In order to achieve the object, according to an aspect of the present disclosure, there is provided an image processing apparatus including: a display control unit that performs a control for displaying a learning input image which is input, as learning data, to a segmentation model for performing semantic segmentation, which determines a plurality of classes in an image in units of pixels; a reception unit that receives, for each of a plurality of estimated regions which are estimated as different classes in the learning input image, an input of a marker having a size smaller than a size of the estimated region; a calculation unit that calculates feature quantities for each of a plurality of partitions in the learning input image; a classification unit that classifies a plurality of the feature quantities for each of the plurality of partitions into clusters for at least the number of the estimated regions; and a generation unit that generates an annotation candidate image in which a classification result of the clusters is reflected in the learning input image so as to be identified.

Preferably, the display control unit performs a control for displaying the annotation candidate image, the reception unit receives a reinput of the marker in the annotation candidate image, the classification unit reclassifies the feature quantities based on the reinput marker, and the generation unit updates the annotation candidate image based on a result of the reclassification.

Preferably, the annotation candidate image is an image in which the partitions are colored according to the clusters to which the feature quantities belong. Further, preferably, the annotation candidate image is an image in which a boundary line for separating the partitions corresponding to the different clusters to which the feature quantities belong is drawn.

Preferably, the classification unit performs the classification based on only the feature quantities of the partition corresponding to the marker, among the feature quantities of all the partitions. On the other hand, preferably, the classification unit performs the classification based on the feature quantities of all the partitions.

preferably, a plurality of representative clusters corresponding to representative labels, which are labels of the representative classes in the learning input image, are set in advance in the classification unit.

Preferably, the display control unit performs a control for displaying the learning input image in which regions of the representative labels are represented so as to be identified, the reception unit receives the input of the marker for each of the plurality of estimated regions which are estimated as the different classes in the regions of the representative labels, and the classification unit classifies the representative clusters into clusters for at least the number of the estimated regions.

Preferably, the learning input image is an image in which cells in culture appear, and the representative labels are the cells and a culture medium of the cells.

Preferably, the calculation unit calculates the feature quantities by using an encoder of a machine learning model. In this case, preferably, the learning input image is an image in which cells in culture appear, and the machine learning model is a model that is learned using the image including a plurality of types of the cells. Further, preferably, the learning input image is an image in which cells in culture appear, and the machine learning model is a model that is learned using the images captured by different devices.

According to another aspect of the present disclosure, there is provided an operation method of an image processing apparatus, the method including: a display control step of performing a control for displaying a learning input image which is input, as learning data, to a segmentation model for performing semantic segmentation, which determines a plurality of classes in an image in units of pixels; a reception step of receiving, for each of a plurality of estimated regions which are estimated as different classes in the learning input image, an input of a marker having a size smaller than a size of the estimated region; a calculation step of calculating feature quantities for each of a plurality of partitions in the learning input image; a classification step of classifying a plurality of the feature quantities for each of the plurality of partitions into clusters for at least the number of the estimated regions; and a generation step of generating an annotation candidate image in which a classification result of the clusters is reflected in the learning input image so as to be identified.

According to still another aspect of the present disclosure, there is provided an operation program of an image processing apparatus, the program causing a computer to function as: a display control unit that performs a control for displaying a learning input image which is input, as learning data, to a segmentation model for performing semantic segmentation, which determines a plurality of classes in an image in units of pixels; a reception unit that receives, for each of a plurality of estimated regions which are estimated as different classes in the learning input image, an input of a marker having a size smaller than a size of the estimated region; a calculation unit that calculates feature quantities for each of a plurality of partitions in the learning input image; a classification unit that classifies a plurality of the feature quantities for each of the plurality of partitions into clusters for at least the number of the estimated regions; and a generation unit that generates an annotation candidate image in which a classification result of the clusters is reflected in the learning input image so as to be identified.

According to the technique of the present disclosure, it is possible to provide an image processing apparatus, an operation method of the image processing apparatus, and an operation program of the image processing apparatus capable of easily generating an annotation image, which is input as learning data to a segmentation model for performing semantic segmentation, in a short time as compared with a case where an annotation image is manually generated.

### BRIEF DESCRIPTION OF THE DRAWINGS

Fig. 1 is a diagram illustrating a machine learning system.
Fig. 2 is a diagram illustrating an outline of processing in the machine learning system.
Fig. 3A and Fig. 3B are diagrams illustrating images of a phase-contrast microscope in which cells in culture appear, Fig. 3A illustrates a learning input image, and Fig. 3B illustrates an annotation image.
Fig. 4 is a block diagram illustrating a computer including an image processing apparatus.
Fig. 5 is a block diagram illustrating a processing unit of a CPU of the image processing apparatus.
Fig. 6 is a diagram illustrating a marker input screen before a marker is input.
Fig. 7 is a diagram illustrating a marker input screen after one marker is input to each estimated region.
Fig. 8 is a diagram illustrating a marker input screen after a plurality of markers are input to each estimated region.
Fig. 9 is a diagram illustrating marker location information.
Fig. 10 is a diagram illustrating partitions for calculating feature quantities.
Fig. 11 is a diagram illustrating a function of an encoder.
Fig. 12 is a diagram illustrating a scheme of the encoder.
Fig. 13 is a diagram illustrating a method of learning a machine learning model using an image including a plurality of types of cells.
Fig. 14 is a diagram illustrating a method of learning a machine learning model using images captured by different phase-contrast microscopes.
Fig. 15 is a diagram illustrating feature quantity information.
Fig. 16 is a diagram illustrating a state where feature quantities of a partition corresponding to a marker are plotted in a two-dimensional feature quantity space based on the feature quantity information.
Fig. 17 is a diagram illustrating a method in which the classification unit performs classification based on only the feature quantities of the partition corresponding to the marker.
Fig. 18 is a diagram illustrating a state where the feature quantities of all partitions are plotted in a feature quantity space.
Fig. 19 is a diagram illustrating classification result information.
Fig. 20 is a diagram illustrating a method in which a generation unit generates an annotation candidate image.
Fig. 21 is a diagram illustrating a candidate image display screen.
Fig. 22 is a diagram illustrating a marker reinput screen.
Fig. 23 is a diagram illustrating a method in which a classification unit reclassifies the feature quantities.
Fig. 24 is a diagram illustrating a method in which a generation unit updates an annotation candidate image.
Fig. 25 is a diagram illustrating a candidate image display screen including an updated annotation candidate image.
Fig. 26 is a diagram illustrating a method in which an annotation candidate image is being updated.
Fig. 27 is a flowchart illustrating a processing procedure of the image processing apparatus.
Fig. 28 is a diagram illustrating a second embodiment in which a classification unit performs classification based on the feature quantities of all partitions.
Fig. 29 is a diagram illustrating a third embodiment in which representative clusters are set in advance.
Fig. 30 is a table illustrating representative labels corresponding to representative clusters.
Fig. 31 is a diagram illustrating a marker input screen before a marker is input, including a learning input image in which regions of representative labels are represented so as to be identified.
Fig. 32 is a diagram illustrating a marker input screen after a marker is input, including a learning input image in which regions of representative labels arc represented so as to be identified.
Fig. 33 is a diagram illustrating a method of classifying representative clusters into a plurality of clusters.

### DESCRIPTION OF THE PREFERRED EMBODIMENTS

### [First Embodiment]

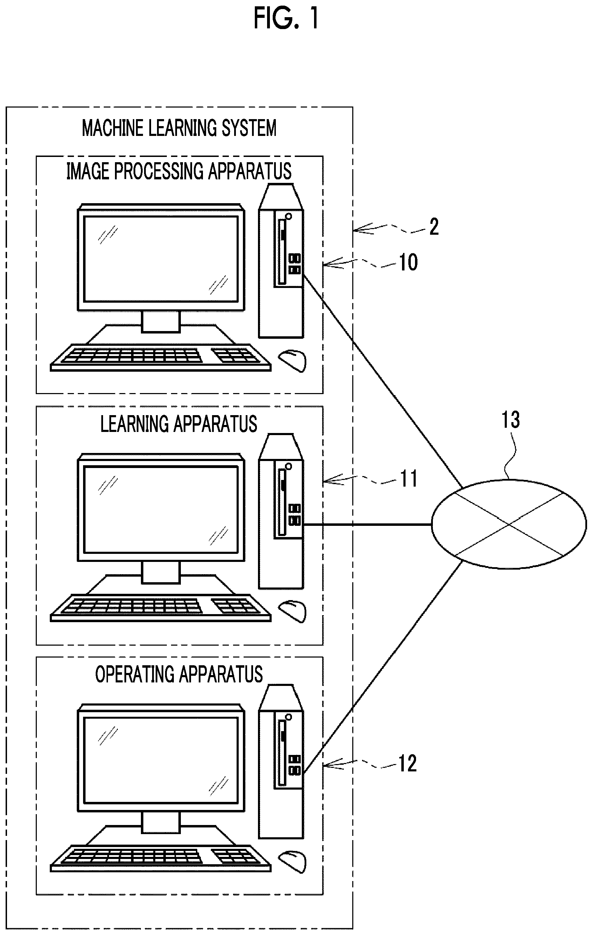

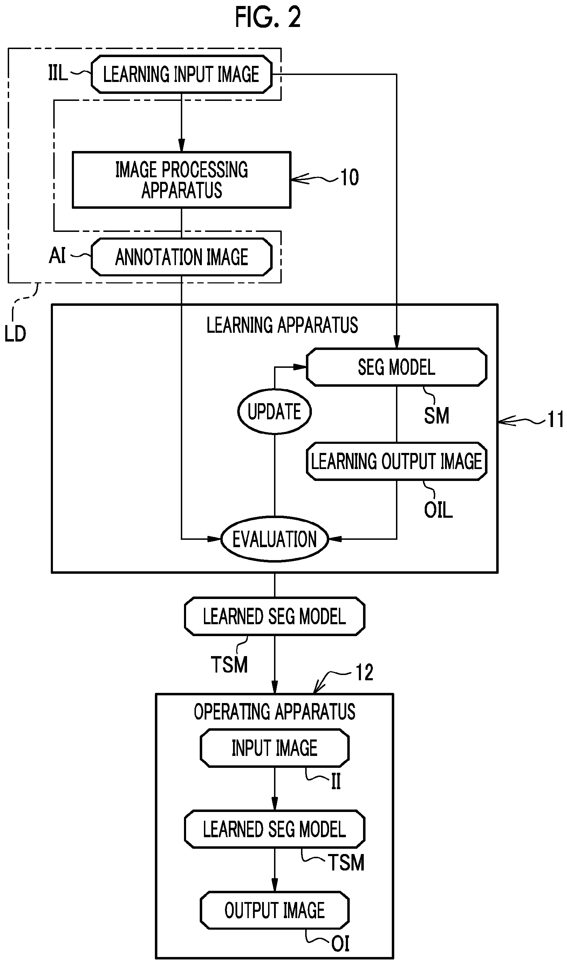

In Fig. 1, a machine learning system 2 is a system that uses a segmentation model (hereinafter, abbreviated as SEG model) SM (refer to Fig. 2) for performing semantic segmentation in which a plurality of classes in an image are determined in units of pixels. The machine learning system 2 includes an image processing apparatus 10, a learning apparatus 11, and an operating apparatus 12. The image processing apparatus 10, the learning apparatus 11, and the operating apparatus 12 are, for example, desktop personal computers. The image processing apparatus 10, the learning apparatus 11, and the operating apparatus 12 are connected to each other so as to communicate with each other via a network 13. The network 13 is, for example, a local area network (LAN) or a wide area network (WAN) such as the Internet or a public communication network.

In Fig. 2, the image processing apparatus 10 receives a learning input image IIL. The image processing apparatus 10 generates an annotation image AI based on the learning input image IIL. The annotation image AI is an image in which a label of a class in the learning input image IIL is designated. The image processing apparatus 10 outputs the annotation image AI to the learning apparatus 11.

The learning apparatus 11 receives the annotation image AI from the image processing apparatus 10. Further, the learning apparatus 11 receives the learning input image IIL. The annotation image AI and the learning input image IIL are included in learning data LD for improving a class determination accuracy of the SEG model SM.

The learning apparatus 11 includes an SEG model SM. The SEG model SM is, for example, U-Net. The learning apparatus 11 learns the learning data LD by inputting the learning data LD to the SEG model SM. More specifically, the learning apparatus 11 inputs the learning input image IIL to the SEG model SM. Thereby, a learning output image OIL is output from the SEG model SM. The learning output image OIL is compared with the annotation image AI, and thus the class determination accuracy of the SEG model SM is evaluated. That is, the annotation image AI is, so to speak, an image for matching an answer with the learning output image OIL. As the class determination accuracy of the SEG model SM is higher, a difference between the annotation image AI and the learning output image OIL is smaller.

The learning apparatus 11 performs mini-batch learning on the SEG model SM by using, for example, mini-batch data. The mini-batch data includes some divided images (100 divided images) among a plurality of divided images obtained by dividing the learning input image IIL and the annotation image AI (for example, 10000 divided images obtained by dividing an original image by a frame having a size of 1/100 of the size of the original image). The learning apparatus 11 creates a plurality of sets (for example, 100 sets) of mini-batch data, and learns the SEG model SM by sequentially inputting each of the plurality of sets of mini-batch data to the SEG model SM.

The learning apparatus 11 updates the SEG model SM in a case where the evaluated class determination accuracy does not reach a preset level. The learning apparatus 11 repeatedly performs processing of inputting the learning input image IIL to the SEG model SM, outputting the learning output image OIL from the SEG model SM, evaluating the class determination accuracy of the SEG model SM, and updating the SEG model SM until the class determination accuracy of the SEG model SM reaches a preset level. In a case where the class determination accuracy reaches a preset level, the learning apparatus 11 outputs the SEG model SM as a learned SEG model TSM, to the operating apparatus 12.

The operating apparatus 12 receives the learned SEG model TSM from the learning apparatus 11. The operating apparatus 12 inputs an input image II in which a class and a contour of an appeared object are not yet determined, to the learned SEG model TSM. The learned SEG model TSM determines a class and a contour of an object appeared in the input image II, and outputs an output image OI as a determination result. The operating apparatus 12 allows the user to browse the output image OI and the input image II by displaying the output image OI and the input image II side by side.

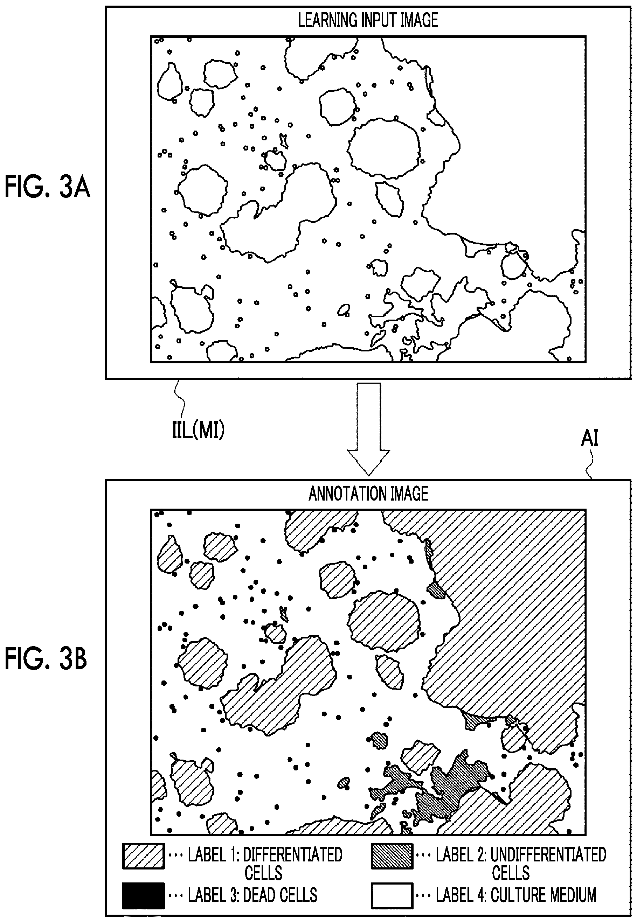

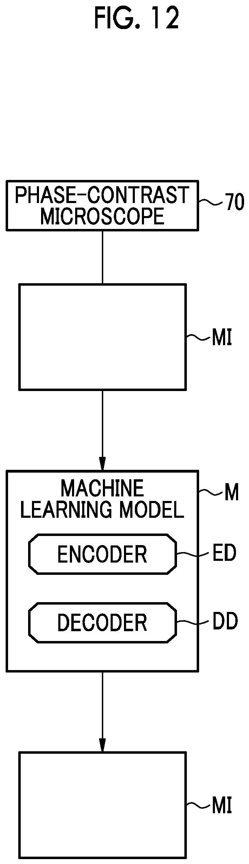

As illustrated in Fig. 3A, in the present example, the learning input image IIL is an image MI (refer to Fig. 12) of a phase-contrast microscope 70 (refer to Fig. 12) in which cells in culture appear. In the learning input image IIL, differentiated cells, undifferentiated cells, dead cells, and a culture medium appear as objects. In this case, in the annotation image AI, as illustrated in Fig. 3B, the label-1 "differentiated cells", the label-2 "undifferentiated cells", the label-3 "dead cells", and the label-4 "culture medium" are respectively designated. The input image II which is input to the learned SEG model TSM is also an image MI of a phase-contrast microscope 70 in which cells in culture appear, similar to the learning input image IIL.

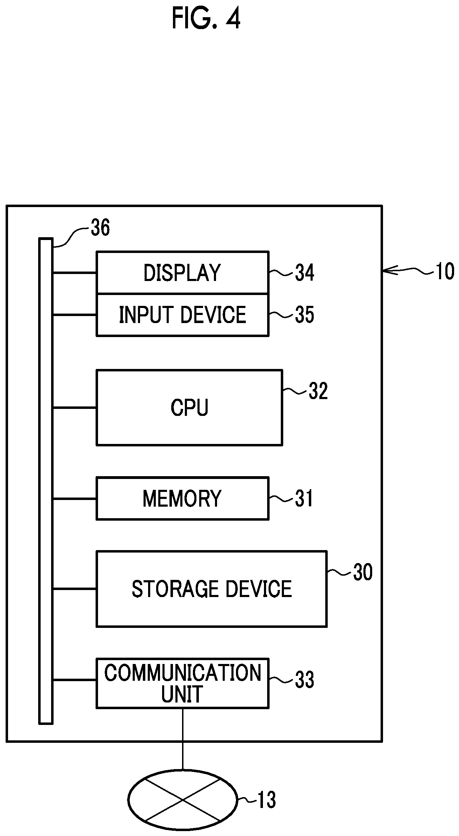

In Fig. 4, a computer including the image processing apparatus 10 includes a storage device 30, a memory 31, a central processing unit (CPU) 32, a communication unit 33, a display 34, and an input device 35. The components are connected to each other via a bus line 36.

The storage device 30 is a hard disk drive that is built in the computer including the image processing apparatus 10 or is connected via a cable or a network. Alternatively, the storage device 30 is a disk array in which a plurality of hard disk drives are connected in series. The storage device 30 stores a control program such as an operating system, various application programs, and various data associated with the programs.

The memory 31 is a work memory which is necessary to execute processing by the CPU 32. The CPU 32 loads the program stored in the storage device 30 into the memory 31, and collectively controls each unit of the computer by executing processing according to the program.

The communication unit 33 is a network interface that controls transmission of various information via the network 13. The display 34 displays various screens. The computer including the image processing apparatus 10 receives an input of an operation instruction from the input device 35 via the various screens. The input device 35 includes a keyboard, a mouse, a touch panel, and the like.

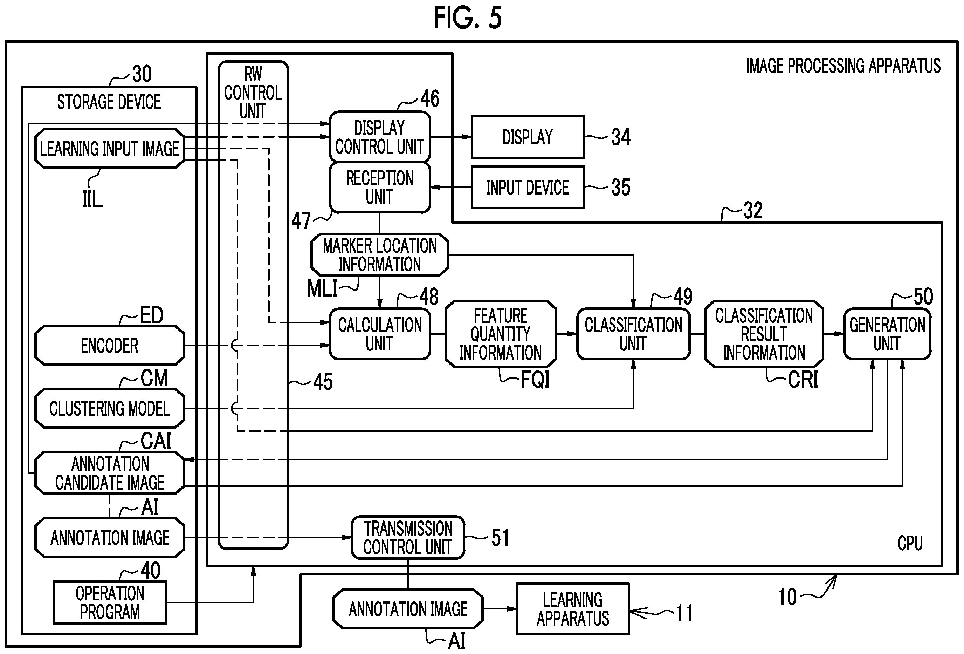

In Fig. 5, an operation program 40 is stored in the storage device 30 of the image processing apparatus 10. The operation program 40 is an application program for causing the computer to function as the image processing apparatus 10. That is, the operation program 40 is an example of "the operation program of the image processing apparatus" according to the technique of the present disclosure.

The storage device 30 also stores the learning input image IIL, an encoder ED, and a clustering model CM.

In a case where the operation program 40 is started, the CPU 32 of the computer including the image processing apparatus 10 functions as a read/write (hereinafter, abbreviated as RW) control unit 45, a display control unit 46, a reception unit 47, a calculation unit 48, a classification unit 49, a generation unit 50, and a transmission control unit 51, in cooperation with the memory 31 and the like.

The RW control unit 45 controls reading of various data stored in the storage device 30 and storing of various data in the storage device 30. The RW control unit 45 reads the learning input image IIL from the storage device 30, and outputs the learning input image IIL to the display control unit 46, the calculation unit 48, and the generation unit 50. In addition, the RW control unit 45 reads the encoder ED from the storage device 30, and outputs the encoder ED to the calculation unit 48. Further, the RW control unit 45 reads the clustering model CM from the storage device 30, and outputs the clustering model CM to the classification unit 49.

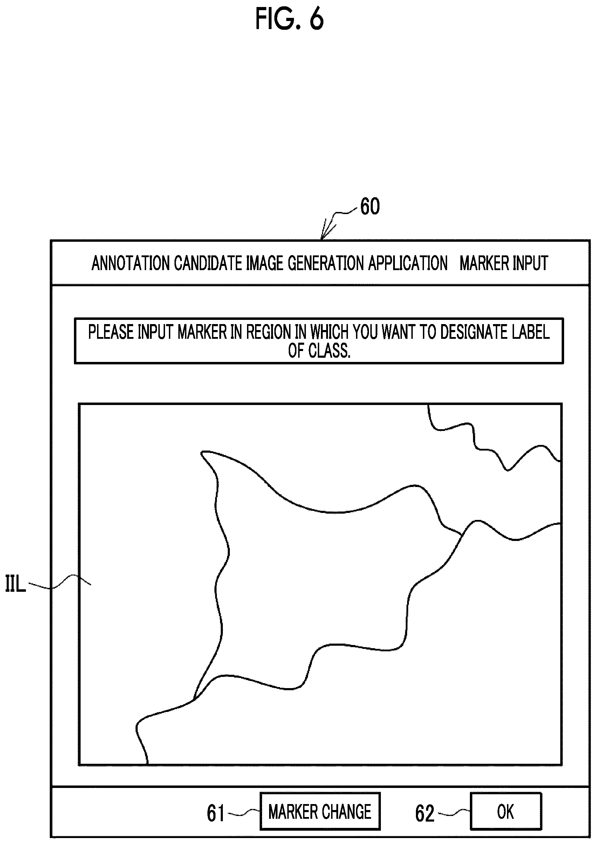

The display control unit 46 controls displaying of various screens on the display 34. For example, the display control unit 46 controls displaying of a marker input screen 60 (refer to Fig. 6) including the learning input image IIL on the display 34.

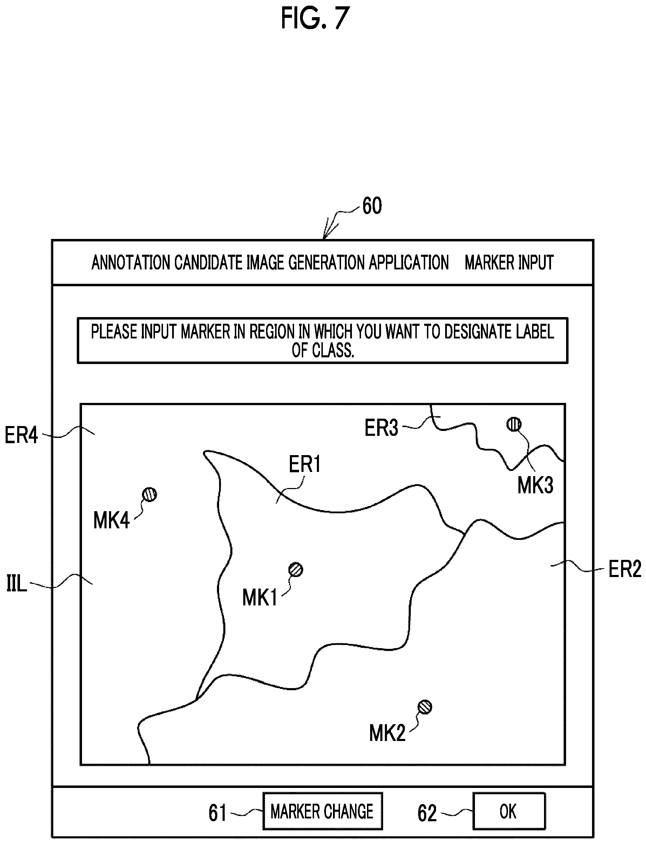

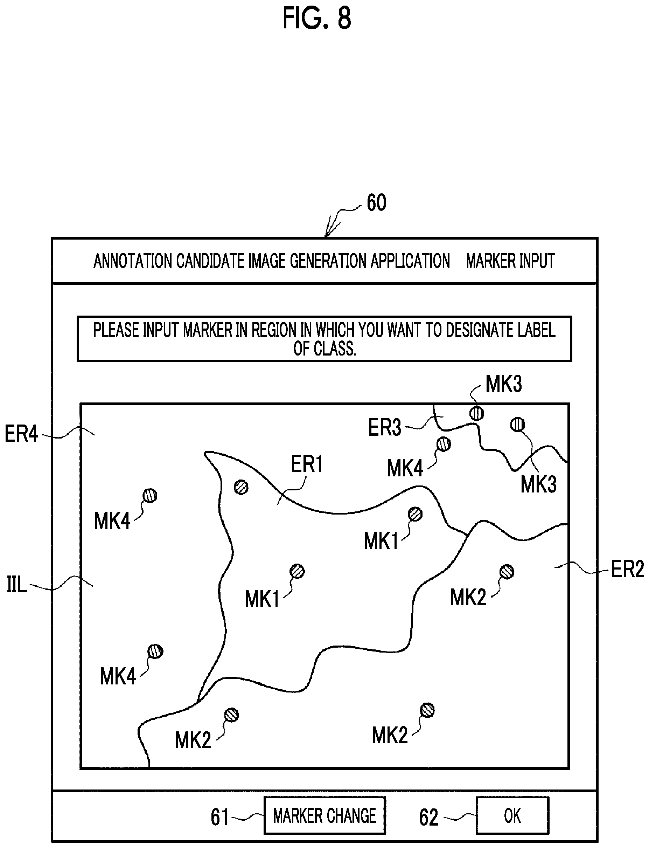

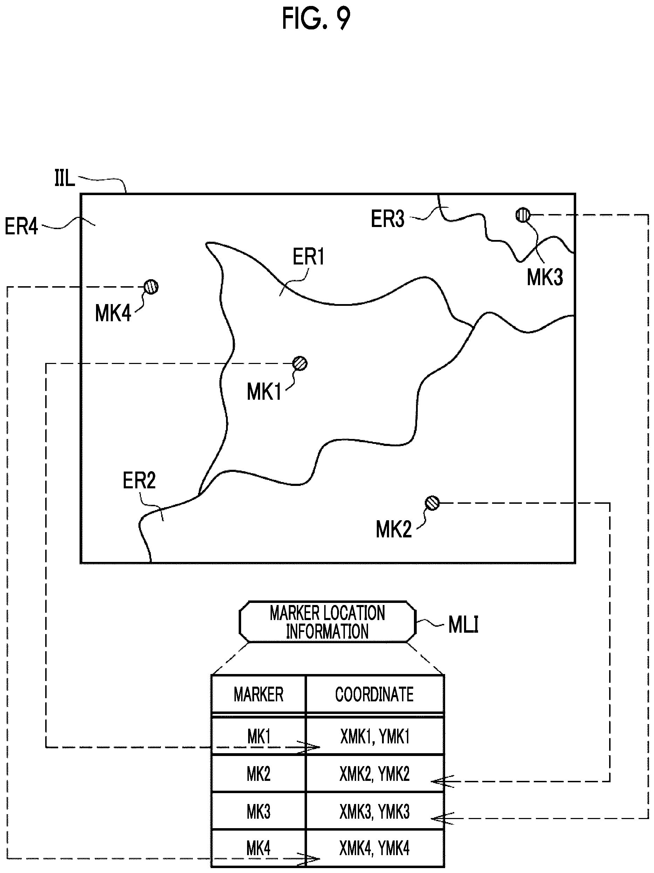

The reception unit 47 receives an input of various operation instructions via the input device 35. For example, the reception unit 47 receives an input of a marker MK (refer to Figs. 7 and 8) in the learning input image IIL via the marker input screen 60. The reception unit 47 outputs marker location information MLI (also refer to Fig. 9) indicating a location of the input marker MK in the learning input image IIL, to the calculation unit 48 and the classification unit 49.

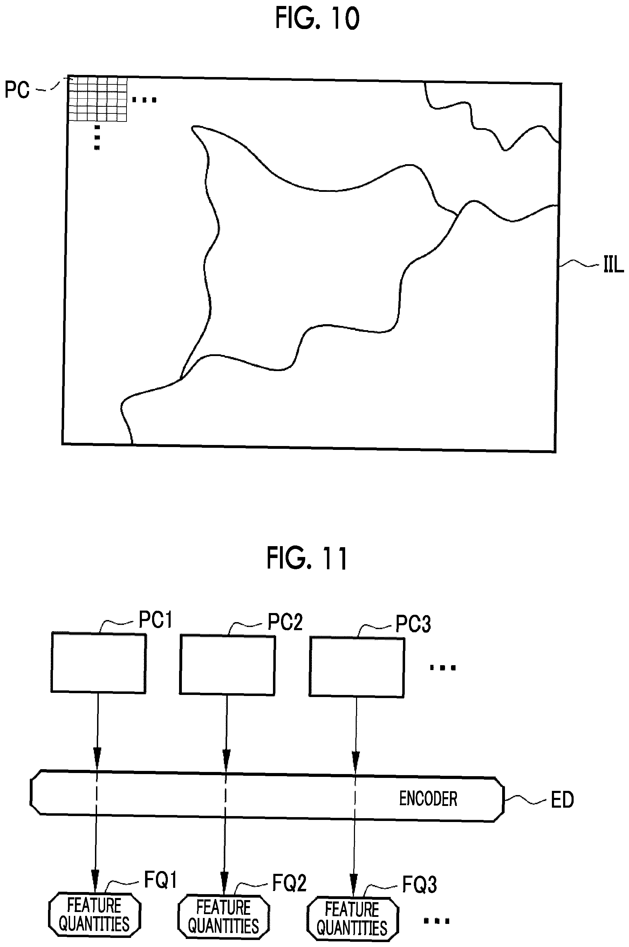

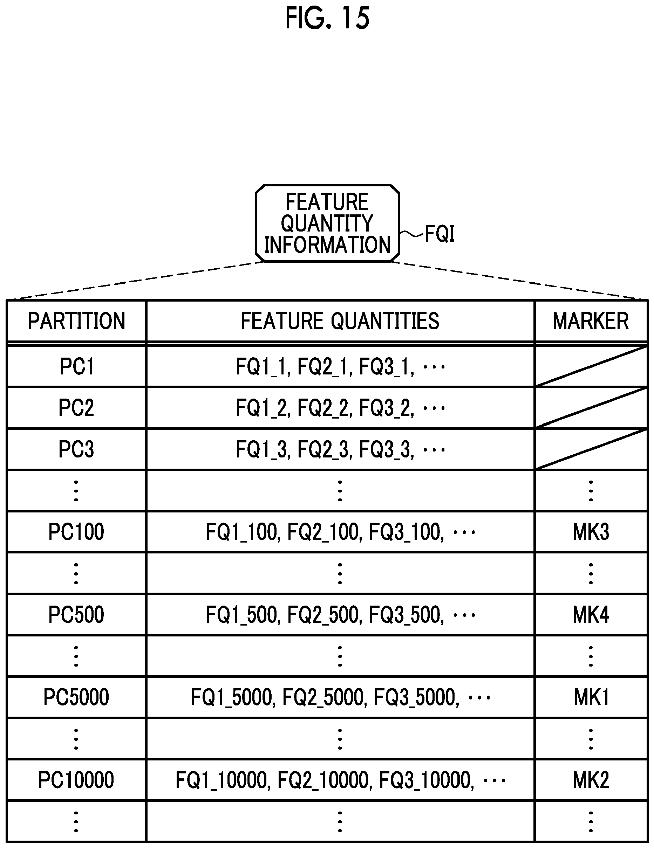

The calculation unit 48 calculates a feature quantity FQ (refer to Fig. 11) for each of a plurality of partitions PCs (refer to Fig. 10) in the learning input image IIL. The calculation unit 48 calculates the feature quantity FQ using the encoder ED. The calculation unit 48 outputs feature quantity information FQI (also refer to Fig. 15), which is information of the calculated feature quantity FQ, to the classification unit 49.

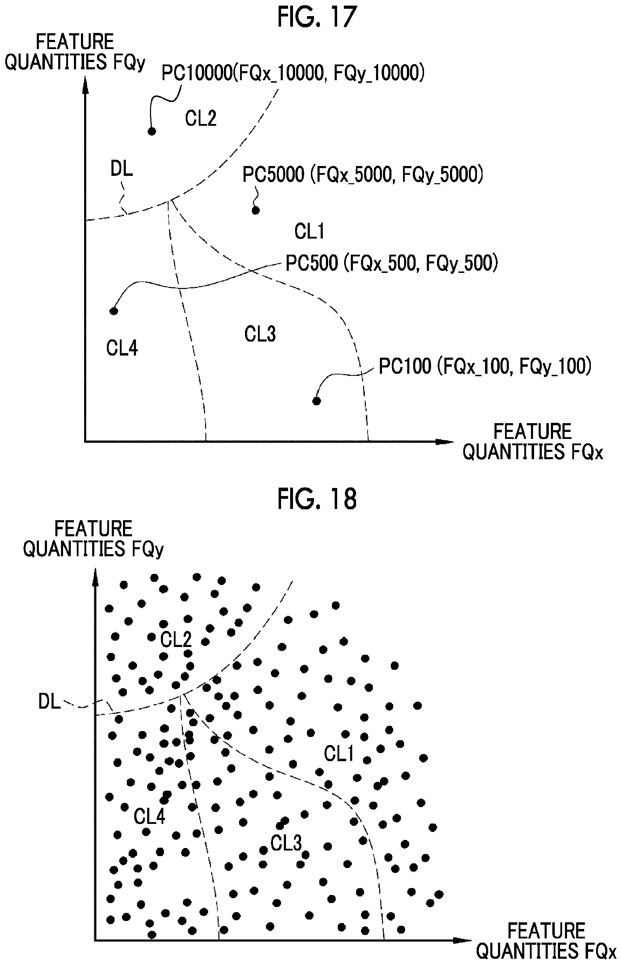

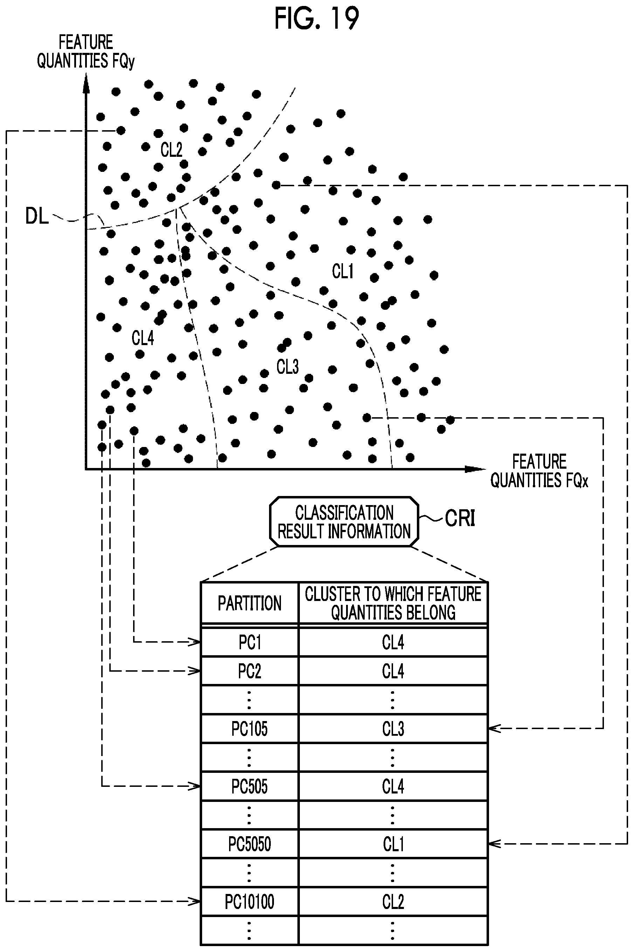

The classification unit 49 classifies a plurality of feature quantities FQs for each of the plurality of partitions PCs into a plurality of clusters CLs (refer to Fig. 17), the plurality of feature quantities FQs being included in the feature quantity information FQI from the calculation unit 48. The classification unit 49 classifies the plurality of feature quantities FQs into the clusters CLs by using the clustering model CM. The classification unit 49 outputs classification result information CRI (also refer to Fig. 19), which is information on the classification result of the clusters CLs, to the generation unit 50.

The generation unit 50 generates, based on the classification result information CRI from the classification unit 49, an annotation candidate image CAI by reflecting the classification result of the clusters CLs into the learning input image IIL so as to be identified. The generation unit 50 outputs the annotation candidate image CAI to the RW control unit 45.

The RW control unit 45 stores the annotation candidate image CAI from the generation unit 50, in the storage device 30. Further, the RW control unit 45 reads the annotation candidate image CAI from the storage device 30, and outputs the annotation candidate image CAI to the display control unit 46, the generation unit 50, and the transmission control unit 51.

The transmission control unit 51 performs a control for transmitting, as the annotation image AI, the annotation candidate image CAI which is determined to be suitable as the annotation image AI by the user, to the learning apparatus 11.

As illustrated in Figs. 6 to 8, the learning input image IIL is included in the marker input screen 60 which is displayed on the display 34 under a control of the display control unit 46. That is, the display control unit 46 performs a control for displaying the learning input image IIL. Further, the marker input screen 60 includes a marker change button 61 and an OK button 62.

Fig. 6 illustrates the marker input screen 60 before a marker MK is input, and Figs. 7 and 8 illustrate the marker input screen 60 after a marker MK is input. The user inputs a marker MK for each of a plurality of estimated regions ERs which are estimated as different classes in the learning input image IIL. The user changes a type of the marker MK for each estimated region ER by selecting the marker change button 61. After inputting the marker MK, the user selects the OK button 62. Thereby, the input of the marker MK is received by the reception unit 47.

The marker MK is, for example, a circle having a diameter of approximately several pixels, and has a size smaller than a size of the estimated region ER. In the marker MK, a color of the circle is changed depending on the type. The marker MK is input by, for example, right-clicking of the mouse, touching of the touch panel with a finger, or the like.

Fig. 7 and Fig. 8 illustrate a case where the user estimates that four different classes of differentiated cells, undifferentiated cells, dead cells, and a culture medium appear in the learning input image IIL. In this case, four types of markers MK1 to MK4 are input to four estimated regions ER1 to ER4 one by one. For example, the marker MK1 is input to the estimated region ER1 of the differentiated cells, the marker MK2 is input to the estimated region ER2 of the undifferentiated cells, the marker MK3 is input to the estimated region ER3 of the dead cells, and the marker MK4 is input to the estimated region ER4 of the culture medium.

Fig. 7 illustrates an example in which the markers MK1 to MK4 are input to the estimated regions ER1 to ER4 one by one. On the other hand, Fig. 8 illustrates an example in which the markers MK1 to MK4 are input to the estimated regions ER1 to ER4 in groups of two or three. As described above, the number of the markers MKs to be input to one estimated region ER is not limited to one.

As illustrated in Fig. 9, the marker location information MLI is information in which a coordinate of a center pixel of the marker MK in the learning input image IIL is registered for each marker MK. By the marker location information MLI, the calculation unit 48 can recognize the location of the marker MK in the learning input image IIL.

In Fig. 10, the partitions PCs for which the calculation unit 48 calculates the feature quantities FQs are obtained by equally dividing the learning input image IIL into a frame having a size of, for example, 1/100 of the size of the learning input image IIL. As illustrated in Fig. 11, the encoder ED is used to calculate the feature quantities FQs by the calculation unit 48. In a case where the partitions PC1, PC2, PC3, ···are input, the encoder ED outputs the feature quantities FQ1, FQ2, FQ3, ··· according to the partitions PC. The method of obtaining the partitions PC is not particularly limited to the example. For example, adjacent partitions PCs may be partially overlapped with each other.

In Fig. 12, the encoder ED originally corresponds to a part of the machine learning model M. The machine learning model M is, for example, U-Net similar to the SEG model SM, and includes a decoder DD in addition to the encoder ED. The encoder ED encodes the image MI into a feature map represented by a plurality of types of feature quantities FQs by performing a convolution calculation using a filter on the image MI of the phase-contrast microscope 70 in which cells in culture appear. The decoder DD decodes the feature map encoded by the encoder ED to the original image MI. As described above, the machine learning model M is a model learned so as to receive the image MI of the phase-contrast microscope 70 in which cells in culture appear and to output the same image MI. That is, the encoder ED is an auto-encoder.

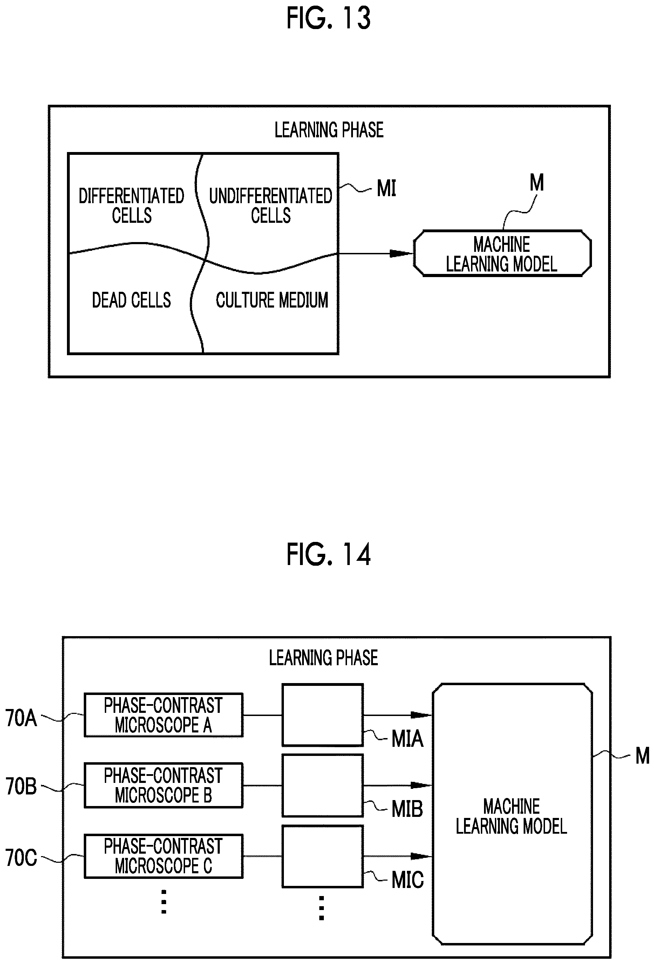

As illustrated in Fig. 13, the machine learning model M is a model learned by using the image MI including a plurality of types of cells such as differentiated cells, undifferentiated cells, and dead cells. Further, as illustrated in Fig. 14, the machine learning model M is a model learned by using images MIA, MIB, MIC, ···, which are captured by different phase-contrast microscopes 70A, 70B, 70C, ···. The phase-contrast microscopes 70A, 70B, 70C, ··· are examples of "different devices" according to the technique of the present disclosure.

As illustrated in Fig. 15, the feature quantity information FQI is information in which the feature quantity FQ is registered for each partition PC. A plurality of types, specifically tens of thousands of types, of the feature quantities FQs are output from one partition PC, such as FQ1_1, FQ2_1, FQ3_1, ···of the partition PC1.

The corresponding marker MK is registered in the partition PC corresponding to the marker MK. The partition PC corresponding to the marker MK is obtained from the marker location information MLI. By the feature quantity information FQI, the classification unit 49 can recognize the feature quantities FQs of each partition PC and the partition PC corresponding to the marker MK. Fig. 15 illustrates an example in which the marker MK3 is registered in the partition PC100, the marker MK4 is registered in the partition PC500, the marker MK1 is registered in the partition PC5000, and the marker MK2 is registered in the partition PC10000.

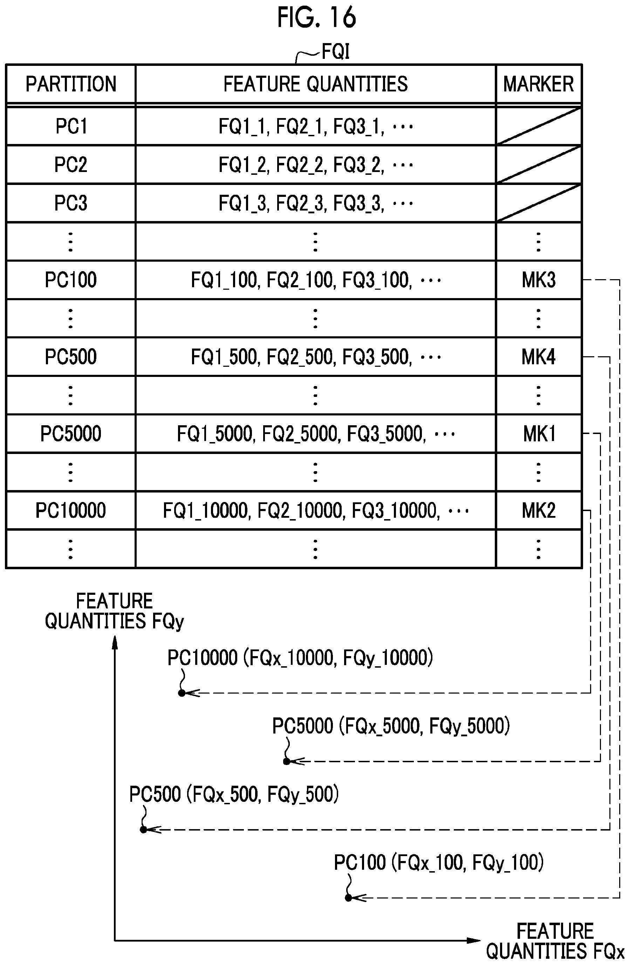

Fig. 16 and Fig. 17 are diagrams schematically illustrating an example in which the feature quantities FQs are classified by the classification unit 49. As described above, there are actually tens of thousands of types of feature quantities FQs. On the other hand, in order to simplify an explanation, a description will be given that there are two types of feature quantities FQx and FQy.

Fig. 16 illustrates a state where the feature quantities FQs of the partition PC corresponding to the marker MK are plotted in a two-dimensional feature quantity space in which a horizontal axis represents the feature quantity FQx and a vertical axis represents the feature quantity FQy based on the feature quantity information FQI. Specifically, the feature quantities FQs of the partition PC corresponding to the marker MK include the feature quantities FQx_5000 and FQy_5000 of the partition PC5000 corresponding to the marker MK1, and the feature quantities FQx_10000 and FQy_10000 of the partition PC10000 corresponding to the marker MK2. Further, the feature quantities FQx_100 and FQy_100 of the partition PC100 corresponding to the marker MK3, and the feature quantities FQx_500 and FQy_500 of the partition PC500 corresponding to the marker MK4 are included.

As illustrated in Fig. 17, the classification unit 49 classifies the feature quantities FQs into a plurality of clusters CLs by a determination line DL. The determination line DL is a boundary of each cluster CL determined by the clustering model CM based on a location relationship of the feature quantities FQs of the partition PC corresponding to the marker MK in the feature quantity space. That is, the classification unit 49 performs classification only based on the feature quantities FQs of the partition PC corresponding to the marker MK. Examples of the clustering model CM in this case include a support vector machine, a model using a random forest, or the like.

Fig. 17 illustrates an example in which the feature quantities FQs are classified into four clusters CL1 to CL4 having the same number as the number of the estimated regions ER1 to ER4 illustrated in Fig. 7 and Fig. 8. The feature quantities FQx_5000 and FQy_5000 of the partition PC5000 corresponding to the marker MK1 belong to the cluster CL1. The feature quantities FQx_10000 and FQy_10000 of the partition PC10000 corresponding to the marker MK2 belong to the cluster CL2. The feature quantities FQx_100 and FQy_100 of the partition PC100 corresponding to the marker MK3 belong to the cluster CL3. The feature quantities FQx_500 and FQy_500 of the partition PC500 corresponding to the marker MK4 belong to the cluster CL4.

As illustrated in Fig. 7 and Fig. 8, since the marker MK1 is input to the estimated region ER1 of the differentiated cells, it can be said that the cluster CL1 is a cluster CL corresponding to the estimated region ER1 of the differentiated cells. Similarly, it can be said that the cluster CL2 is a cluster CL corresponding to the estimated region ER2 of the undifferentiated cells, it can be said that the cluster CL3 is a cluster CL corresponding to the estimated region ER3 of the dead cells, and it can be said that the cluster CL4 is a cluster CL corresponding to the estimated region ER4 of the culture medium.

Fig. 18 illustrates a state where the feature quantities FQs of the other partitions PCs are plotted in the feature quantity space in addition to the feature quantities FQs of the partition PC corresponding to the marker MK. In this way, each feature quantity FQ belongs to any one cluster CL of the plurality of clusters CL1 to CL4.

As illustrated in Fig. 19, the classification result information CRI is information in which the cluster CL to which the feature quantities FQs belong is registered for each partition PC. By the classification result information CRI, the generation unit 50 can recognize the cluster CL to which the feature quantities FQs of each partition PC belong.

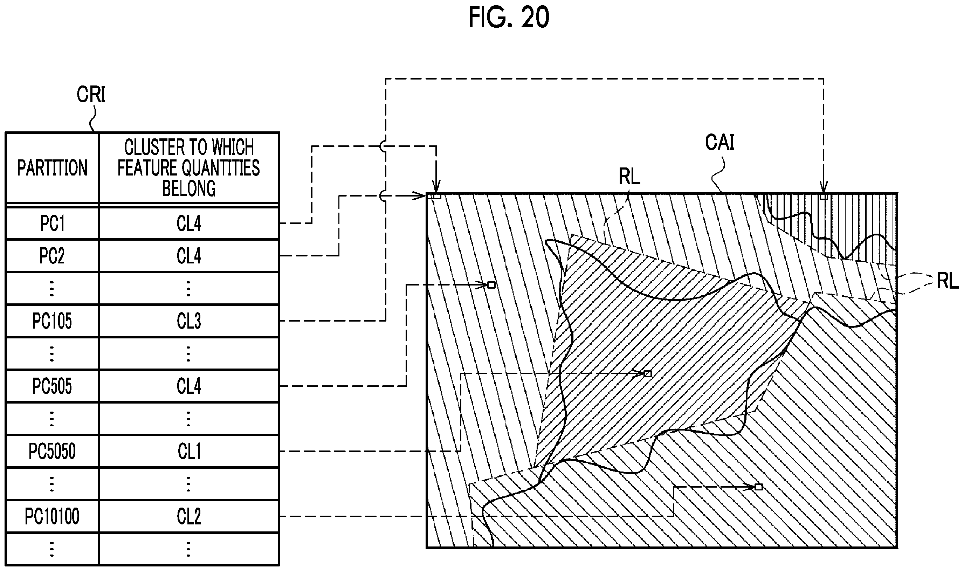

As illustrated in Fig. 20, the generation unit 50 generates an annotation candidate image CAI based on the classification result information CRI. The generation unit 50 performs coloring of the partition PC according to the cluster CL to which the feature quantities FQs belong. The generation unit 50 performs coloring of the partition PC by using, for example, the same color as the marker MK. Further, the generation unit 50 performs drawing of a boundary line RL that separates the partitions PCs corresponding to different clusters CLs to which the feature quantities FQs belong. By the coloring and the drawing of the boundary line RL, the generation unit 50 generates an annotation candidate image CAI in which the classification result of the clusters CLs is reflected so as to be identified.

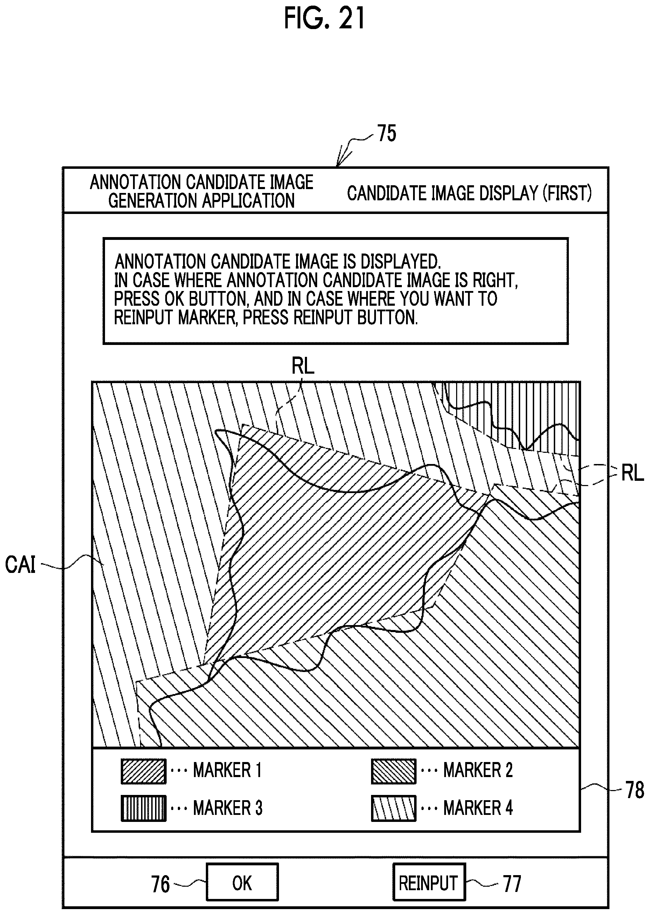

As illustrated in Fig. 21, a candidate image display screen 75 is displayed on the display 34 under a control of the display control unit 46, and the candidate image display screen 75 includes the annotation candidate image CAI. That is, the display control unit 46 performs a control for displaying the annotation candidate image CAI. Further, the candidate image display screen 75 includes an OK button 76 and a reinput button 77. At a bottom portion of the annotation candidate image CAI, a legend 78 indicating coloring of the partitions PCs for each marker MK is displayed.

In a case where it is determined that the annotation candidate image CAI is suitable as the annotation image AI, the user selects the OK button 76. In a case where the OK button 76 is selected, the subsequent processing is not performed. On the other hand, in a case where it is determined that the annotation candidate image CAI is to be further modified, the user selects the reinput button 77.

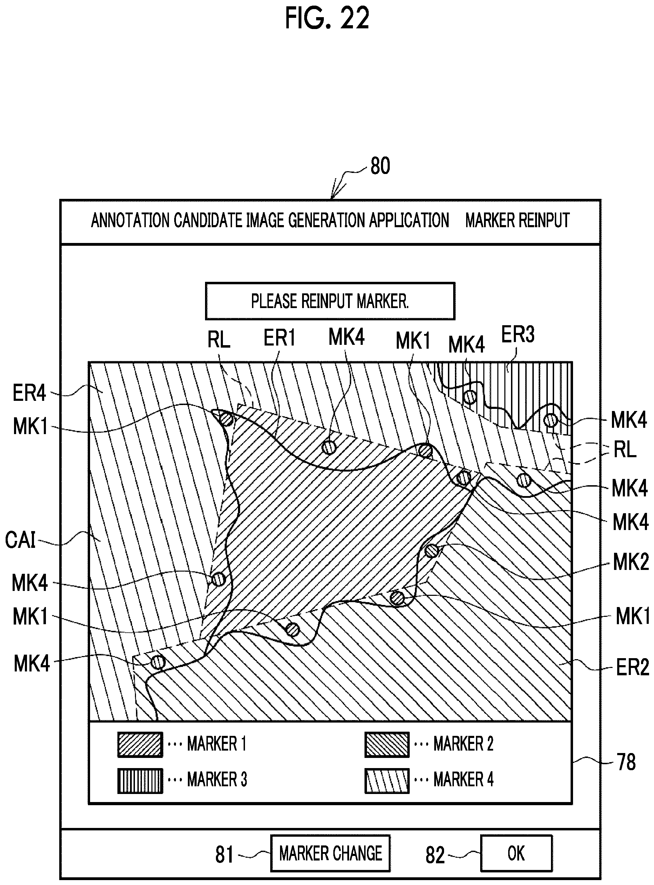

In a case where the reinput button 77 is selected, the display control unit 46 performs a control for displaying a marker reinput screen 80 illustrated in Fig. 22 on the display 34. The marker reinput screen 80 basically has the same function as the marker input screen 60 illustrated in Fig. 6 to Fig. 8, except that the learning input image IIL is changed to the annotation candidate image CAI.

On the marker reinput screen 80, the user reinputs a marker MK in a portion at which the class indicated in the annotation candidate image CAI is different from the class estimated by himself/herself. Specifically, the user reinputs a marker MK1 in a portion that is estimated as a region of the differentiated cells (estimated region ER1) but is determined as another class in the annotation candidate image CAI. Similarly, the user reinputs a marker MK2 in a portion that is estimated as a region of the undifferentiated cells (estimated region ER2) but is determined as another class in the annotation candidate image CAI. Further, the user reinputs a marker MK4 in a portion that is estimated as a region of the culture medium (estimated region ER4) but is determined as another class in the annotation candidate image CAI. In Fig. 22, a portion that is estimated as a region of the dead cells (estimated region ER3) but is determined as another class in the annotation candidate image CAI is not drawn. On the other hand, in a case where the portion is present, the user reinputs a marker MK3 in the portion.

As in the case of the marker input screen 60, the user changes a type of the marker MK for each estimated region ER by selecting the marker change button 81. After inputting the marker MK, the user selects the OK button 82. Thereby, the reinput of the marker MK is received by the reception unit 47.

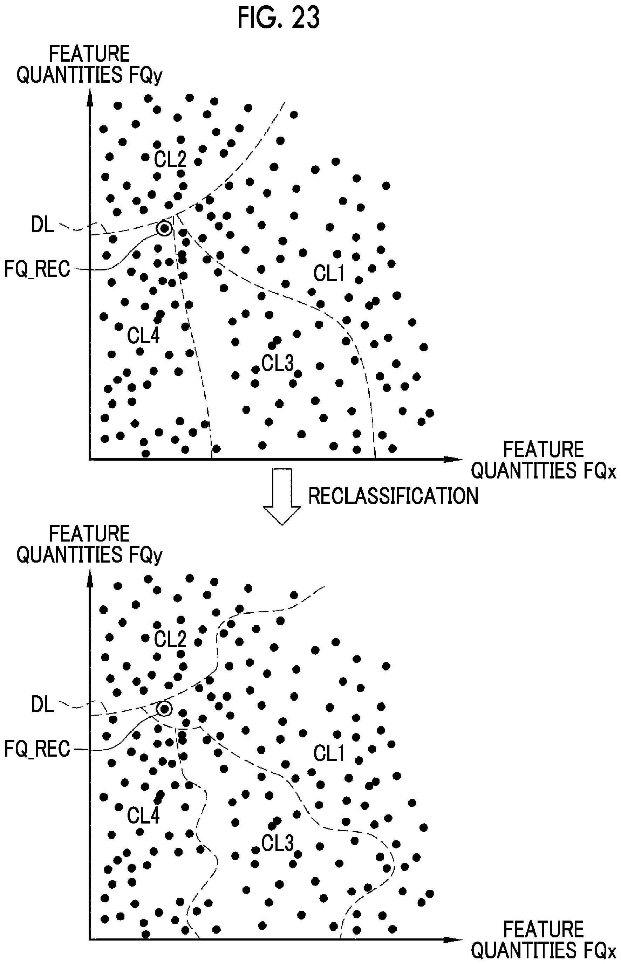

As illustrated in Fig. 23, the classification unit 49 reclassifies the feature quantities FQs based on the marker location information MLI of the marker MK which is reinput on the marker reinput screen 80. Specifically, the classification unit 49 changes the determination line DL such that the feature quantities FQs of the partition PC corresponding to the reinput marker MK belong to the cluster CL corresponding to the estimated region ER in which the marker MK is reinput. The classification unit 49 outputs the classification result information CRI indicating a result of the reclassification to the generation unit 50.

As an example, a case where the user reinputs a marker MK1 in a portion that is estimated as a region of the differentiated cells (estimated region ER1) but is determined as the culture medium in the annotation candidate image CAI is considered. In this case, the feature quantity FQ_REC of the partition PC corresponding to the reinput marker MK1 belongs to the cluster CL4 corresponding to the estimated region ER4 of the culture medium before the reclassification. The classification unit 49 changes the determination line DL such that the feature quantity FQ_REC belonging to the cluster CL4 belongs to the cluster CL1 corresponding to the estimated region ER1 of the differentiated cells. In a case where reclassification is performed, the cluster CL to which the feature quantity FQ belongs may be changed, the feature quantity FQ being similar to the feature quantity FQ_REC of the partition PC corresponding to the reinput marker MK and having a short distance from the feature quantity FQ_REC in the feature quantity space.

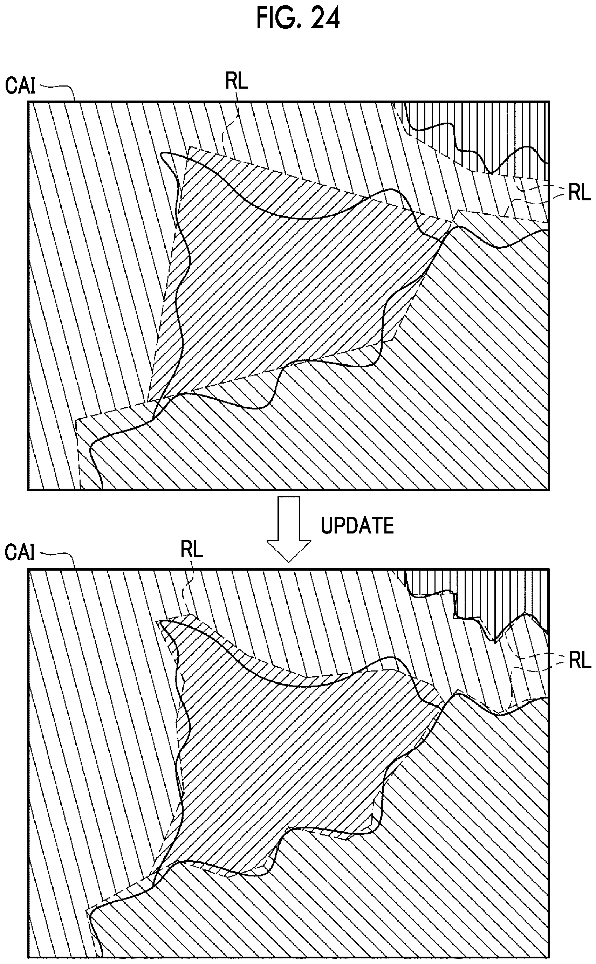

As illustrated in Fig. 24, the generation unit 50 updates the annotation candidate image CAI based on the result of the reclassification. The updated annotation candidate image CAI is an image in which coloring of each partition PC is performed again and drawing of the boundary line RL is performed again based on the result of the reclassification. Further, the updated annotation candidate image CAI is an image which has a small deviation from the estimation of each class by the user as compared with the annotation candidate image CAI before update.

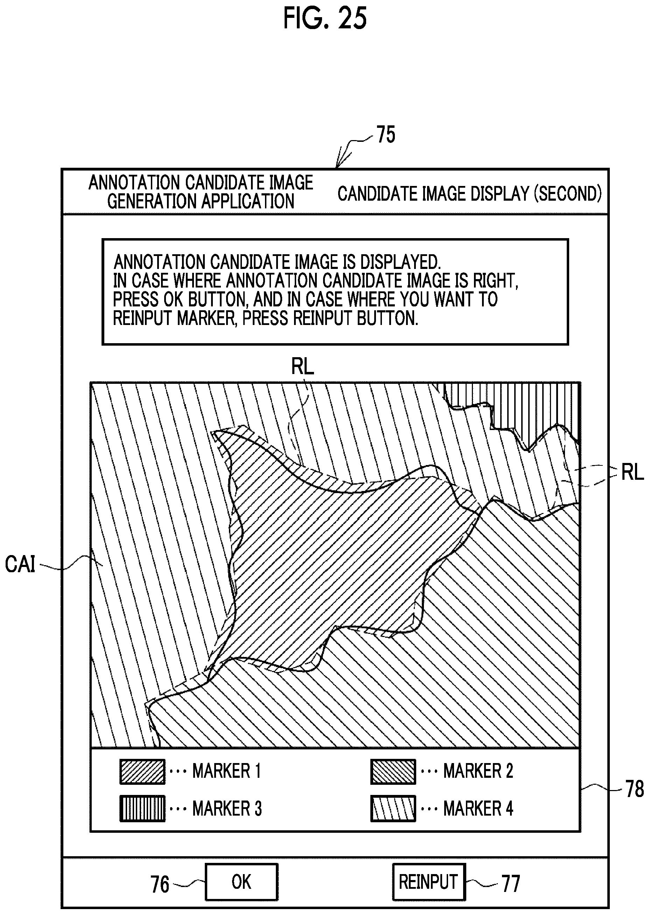

As illustrated in Fig. 25, the display control unit 46 performs a control for displaying the candidate image display screen 75 including the updated annotation candidate image CAI on the display 34. In a case where it is determined that the updated annotation candidate image CAI is suitable as the annotation image AI, the user selects the OK button 76. On the other hand, in a case where it is determined that the annotation candidate image CAI is to be further modified, the user selects the reinput button 77. In a case where the reinput button 77 is selected, the display control unit 46 performs a control for displaying the marker reinput screen 80 including the updated annotation candidate image CAI on the display 34. The above-described processing is repeated in subsequent processing, and thus a description thereof will be omitted.

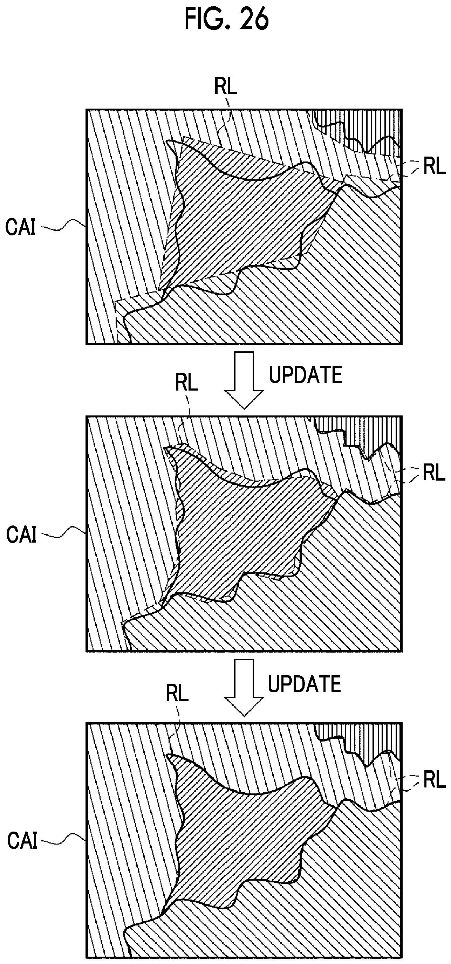

In this way, display of the annotation candidate image CAI by the display control unit 46, reception of reinput of the marker MK by the reception unit 47, reclassification of the feature quantities FQs by the classification unit 49, and update of the annotation candidate image CAI by the generation unit 50 are repeated. Thereby, as illustrated in Fig. 26, the annotation candidate image CAI becomes an image which has a smaller deviation from the estimation of each class by the user.

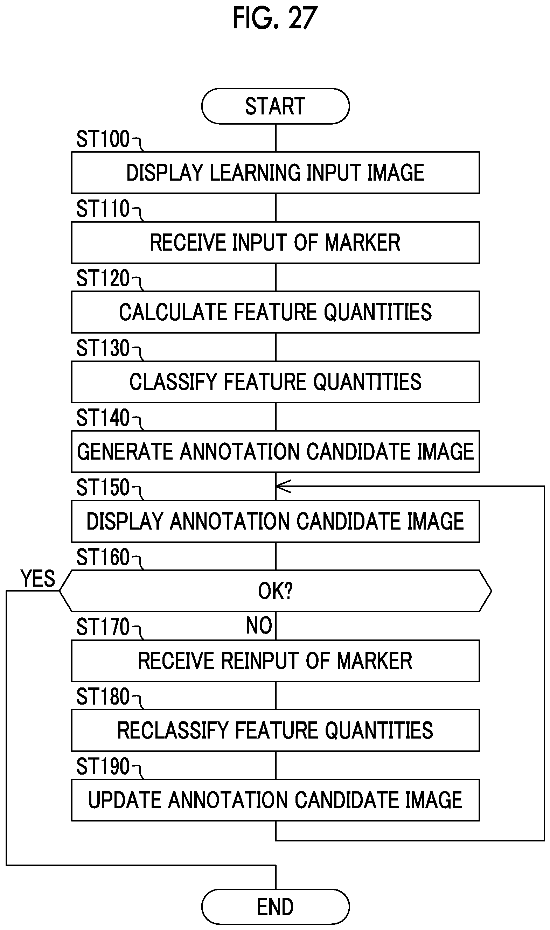

Next, an operation according to the configuration will be described with reference to a flowchart illustrated in Fig. 27. First, in a case where the operation program 40 is started in the image processing apparatus 10, as illustrated in Fig. 5, the CPU 32 of the image processing apparatus 10 functions as the RW control unit 45, the display control unit 46, the reception unit 47, the calculation unit 48, the classification unit 49, the generation unit 50, and the transmission control unit 51.

In the image processing apparatus 10, as illustrated in Fig. 6, the display control unit 46 displays the marker input screen 60 including the learning input image IIL on the display 34 (step ST100). It is noted that step ST100 is an example of "a display control step" according to the technique of the present disclosure.

As illustrated in Fig. 7 and Fig. 8, the user inputs a marker MK for each of the plurality of estimated regions ERs which are estimated as different classes in the learning input image IIL. After inputting the marker MK, in a case where the OK button 62 is selected by the user, the reception unit 47 receives the input of the marker MK (step ST110). The reception unit 47 creates marker location information MLI illustrated in Fig. 9. The marker location information MLI is output from the reception unit 47 to the calculation unit 48. It is noted that step ST110 is an example of "a reception step" according to the technique of the present disclosure.

As illustrated in Fig. 11, the calculation unit 48 calculates the feature quantities FQs for each of the plurality of partitions PCs in the learning input image IIL by using the encoder ED (step ST120). The calculation unit 48 creates feature quantity information FQI illustrated in Fig. 15. The feature quantity information FQI is output from the calculation unit 48 to the classification unit 49. It is noted that step ST120 is an example of "a calculation step" according to the technique of the present disclosure.

As illustrated in Figs. 16 to 18, the classification unit 49 classifies the plurality of feature quantities FQs for each of the plurality of partitions PCs into clusters CLs for at least the number of the estimated regions ERs, by using the clustering model CM (step ST130). The classification unit 49 creates the classification result information CRI illustrated in Fig. 19. The classification result information CRI is output from the classification unit 49 to the generation unit 50. It is noted that step ST130 is an example of "a classification step" according to the technique of the present disclosure.

As illustrated in Fig. 20, the generation unit 50 generates an annotation candidate image CAI in which the classification result of the clusters CLs is reflected in the learning input image IIL so as to be identified (step ST140). It is noted that step ST140 is an example of "a generation step" according to the technique of the present disclosure.

As illustrated in Fig. 21, the display control unit 46 displays the candidate image display screen 75 including the annotation candidate image CAI on the display 34 (step ST150). In a case where the OK button 76 is selected on the candidate image display screen 75 by the user (YES in step ST160), the process is ended.

On the other hand, in a case where the reinput button 77 is selected on the candidate image display screen 75 by the user (NO in step ST160), as illustrated in Fig. 22, the display control unit 46 displays the marker reinput screen 80 on the display 34. A marker MK is reinput via the marker reinput screen 80. After reinputting the marker MK, in a case where the OK button 82 is selected by the user, the reception unit 47 receives the reinput of the marker MK (step ST170).

As illustrated in Fig. 23, the classification unit 49 reclassifies the feature quantities FQs based on the reinput marker MK (step ST180). As illustrated in Fig. 24, the generation unit 50 updates the annotation candidate image CAI based on the result of the reclassification (step ST190). Thereafter, as illustrated in Fig. 25, the display control unit 46 displays the candidate image display screen 75 including the updated annotation candidate image CAI on the display 34 (step ST150). Processing of step ST150 and steps ST170 to ST190 is repeated until the OK button 76 is selected on the candidate image display screen 75 by the user (YES in step ST160).

In a case where the OK button 76 is selected by the user, the annotation candidate image CAI is displayed on the candidate image display screen 75. In this case, the transmission control unit 51 transmits, as the annotation image AI, the annotation candidate image CAI to the learning apparatus 11.

As described above, in the image processing apparatus 10, as illustrated in Fig. 6, the display control unit 46 displays the learning input image IIL. The reception unit 47 receives input of a marker MK for each of the plurality of estimated regions ERs which are estimated as different classes in the learning input image IIL. Next, as illustrated in Fig. 11, the calculation unit 48 calculates the feature quantities FQs for each of the plurality of partitions PCs in the learning input image IIL. As illustrated in Figs. 16 to 18, the classification unit 49 classifies the plurality of feature quantities FQs for each of the plurality of partitions PCs into clusters CLs for at least the number of the estimated regions ERs. As illustrated in Fig. 20, the generation unit 50 generates an annotation candidate image CAI in which the classification result of the clusters CLs is reflected in the learning input image IIL so as to be identified. Thereby, the user can obtain the annotation candidate image CAI by simply inputting the marker MK. Therefore, it is possible to easily generate the annotation image Al in a short time as compared with a case where the annotation image AI is manually generated.

In a case where the labels of the classes of the annotation image AI are manually designated, a method of designating the labels varies depending on a user who performs the designation, as a result, a stable and accurate annotation image AI cannot be obtained. On the other hand, in the technique of the present disclosure, it is possible to stably obtain a relatively-accurate annotation image AI regardless of individual variations of users. Further, even in a case of the learning input image IIL in which the differentiated cells and the undifferentiated cells appear in a high density and in a complicated shape, that is, even in a case of the learning input image IIL in which it is difficult to manually designate the labels of the classes, it is possible to easily obtain the annotation image AI.

In the image processing apparatus 10, as illustrated in Fig. 21, the display control unit 46 displays the candidate image display screen 75 including the annotation candidate image CAI on the display 34. The reception unit 47 receives a reinput of the marker MK in the annotation candidate image CAI. Subsequently, as illustrated in Fig. 23, the classification unit 49 reclassifies the feature quantities FQs based on the reinput marker MK, and as illustrated in Fig. 24, the generation unit 50 updates the annotation candidate image CAI based on a result of the reclassification. Therefore, it is possible to easily obtain a more detailed annotation image AI which has a small deviation from the estimation of each class by the user.

As illustrated in Fig. 20, the annotation candidate image CAI is an image in which the partitions PCs are colored according to the clusters CLs to which the feature quantities FQs belong and the boundary line RL for separating the partitions PCs corresponding to different clusters CLs to which the feature quantities FQs belong is drawn. Therefore, it is easy to compare the annotation candidate image CAI with the estimation of each class by the user. In a case of reinput of the marker MK, the user can recognize a portion at which the marker MK should be reinput at a glance. Therefore, this is suitable.

As illustrated in Fig. 17, the classification unit 49 performs classification based on only the feature quantities FQs of the partition PC corresponding to the marker MK among the feature quantities FQs of all the partitions PCs. That is, the classification unit 49 performs classification using minimum data. Therefore, it is possible to reduce a load on processing of the classification.

As illustrated in Fig. 11, the calculation unit 48 calculates the feature quantities FQs by using the encoder ED of the machine learning model M. As illustrated in Fig. 13, the machine learning model M is a model learned by using the image MI including a plurality of types of cells. Further, as illustrated in Fig. 14, the machine learning model M is a model learned by using the images MI captured by different phase-contrast microscopes 70. Therefore, there is no restriction such as a restriction that the learning input image IIL should include an image MI in which only specific cells appear or a restriction that the learning input image IIL should include an image MI captured by a specific phase-contrast microscope 70. Therefore, robustness of the encoder ED can be improved.

The plurality of types of cells are not limited to sets of the differentiated cells, the undifferentiated cells, and the dead cells. The plurality of types of cells may be nerve cells, skin cells, cancer cells, and non-cancer cells, and the like.

### [Second Embodiment]

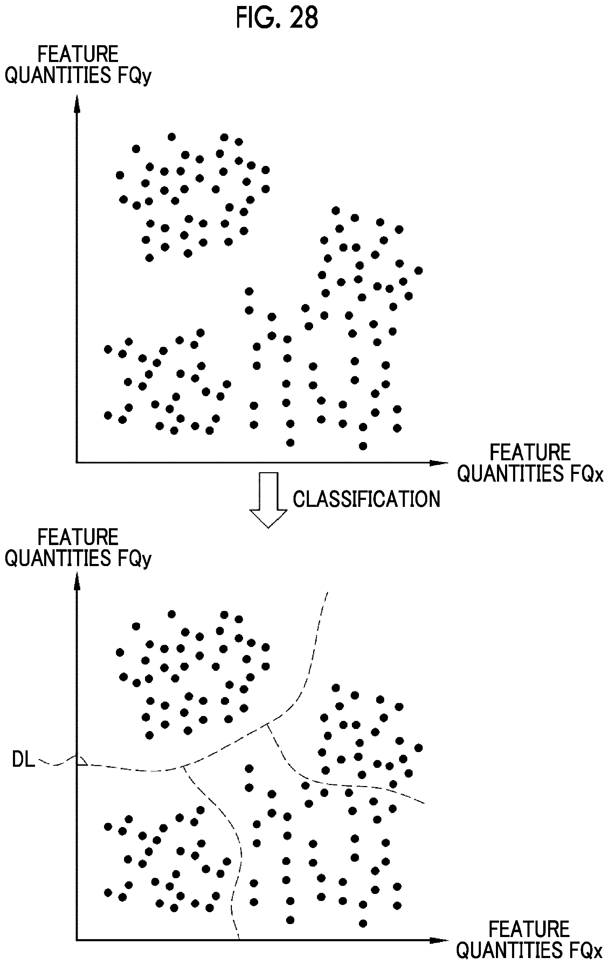

In a second embodiment, as illustrated in Fig. 28, the classification unit 49 performs classification based on the feature quantities FQs of all the partitions PCs. Examples of the clustering model CM in this case include a model using a k-means method. By referring to the feature quantities FQs of all the partitions PCs, as compared with the first embodiment in which the classification is performed based on only the feature quantities FQs of the partition PC corresponding to the marker MK, it is considered that the accuracy of the determination line DL is higher. Therefore, it is possible to reduce the number of times the annotation candidate image CAI is updated.

### [Third Embodiment]

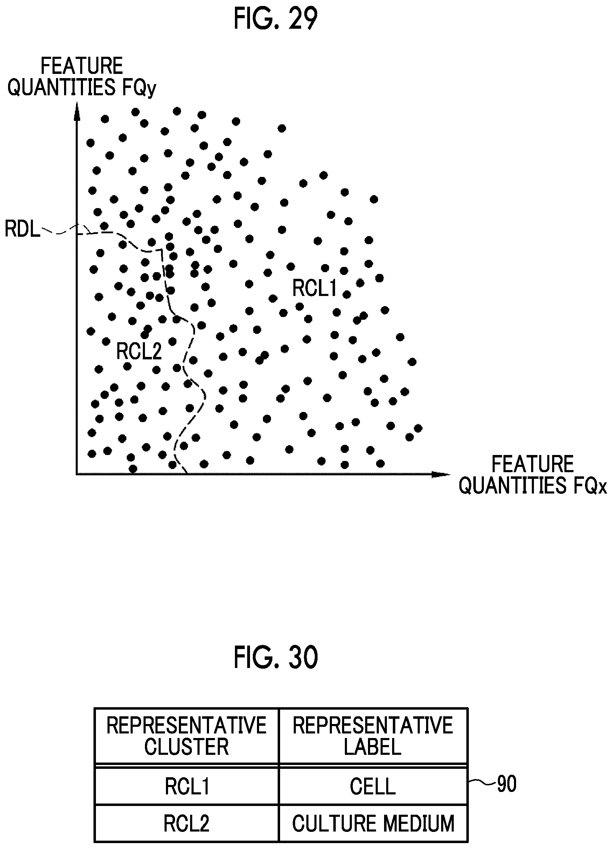

In a third embodiment illustrated in Figs. 29 to 33, a plurality of representative clusters RCLs corresponding to representative labels, which are labels of the representative classes in the learning input image IIL, are set in advance.

As illustrated in Fig. 29, in the classification unit 49 according to the third embodiment, a representative cluster RCL1 and a representative cluster RCL2 are set in advance. In other words, the clustering model CM used in the classification unit 49 recognizes the determination line RDL for the representative cluster RCL1 and the representative cluster RCL2 in advance.

As illustrated in a table 90 of Fig. 30, the representative label of the representative cluster RCL1 is a cell, and the representative label of the representative cluster RCL2 is a culture medium. Here, the representative label "cell" is a concept including differentiated cells, undifferentiated cells, and dead cells.

In this case, the calculation unit 48 calculates the feature quantities FQs for each partition PC of the learning input image IIL, and the classification unit 49 classifies the feature quantities FQs into the representative cluster RCL1 or the representative cluster RCL2 according to the determination line RDL. The generation unit 50 generates a learning input image IIL in which regions of the representative labels are represented so as to be identified based on the classification result information CRI in which the feature quantities FQs are classified into the representative cluster RCL1 and the representative cluster RCL2.

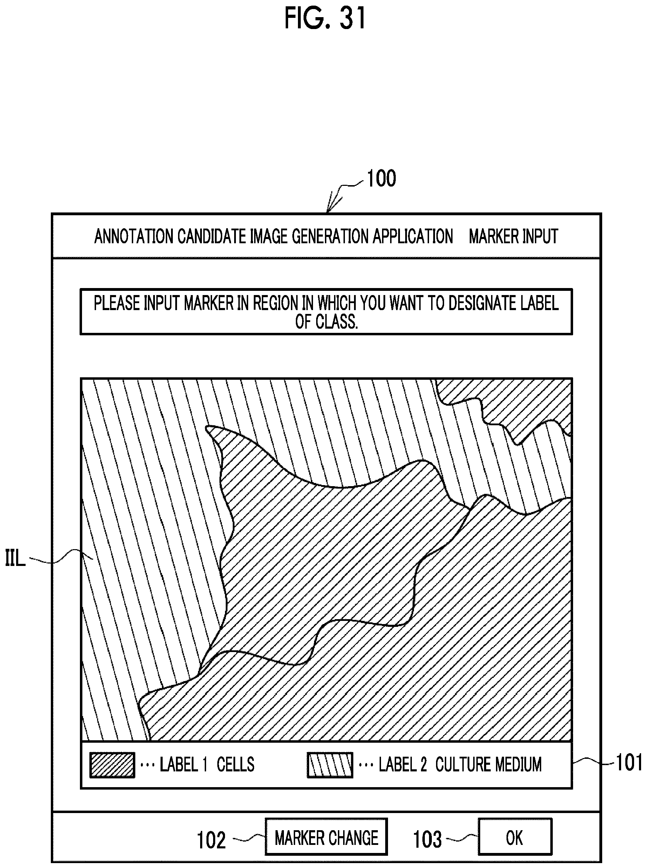

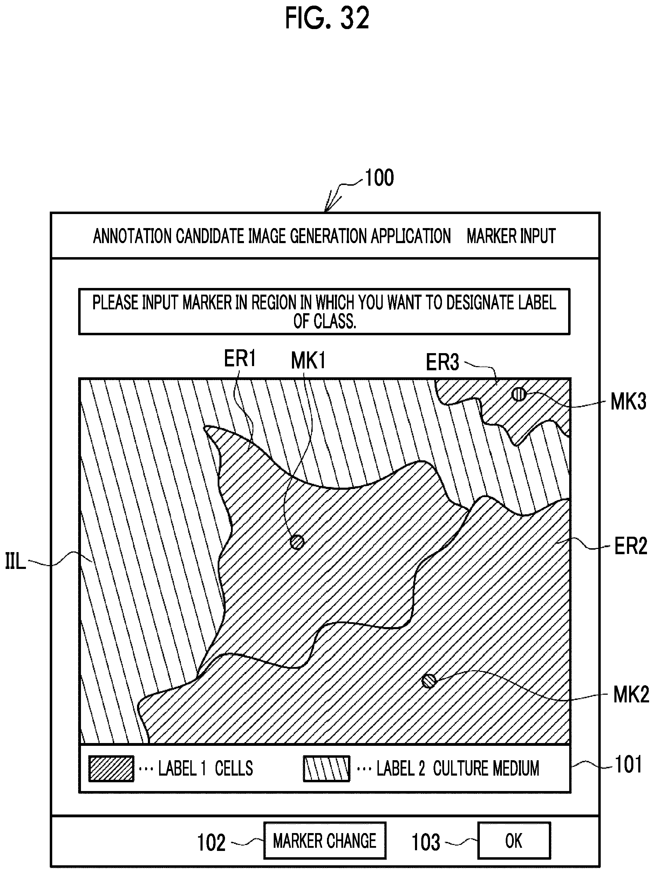

As illustrated in Figs. 31 and 32, the marker input screen 100 according to the third embodiment is displayed on the display 34 under a control of the display control unit 46. The marker input screen 100 includes a learning input image IIL in which regions of the representative labels are represented so as to be identified. That is, the display control unit 46 performs a control for displaying the learning input image IIL in which regions of the representative labels are represented so as to be identified. In the present example, as illustrated in Fig. 30, the representative labels are a cell and a culture medium. Therefore, as illustrated in a legend 101 and hatching, in the learning input image IIL, a region of cells and a region of a culture medium are represented so as to be identified.

Fig. 31 illustrates the marker input screen 100 before a marker MK is input, and Fig. 32 illustrates the marker input screen 100 after a marker MK is input. The user inputs a marker MK for each of a plurality of estimated regions ERs which are estimated as different classes in the regions of the representative labels. The user changes a type of the marker MK for each estimated region ER by selecting the marker change button 102. After inputting the marker MK, the user selects the OK button 103. Thereby, the reception unit 47 receives input of a marker MK for each of the plurality of estimated regions ERs which are estimated as different classes in the regions of the representative labels.

Fig. 32 illustrates a case where the user estimates that three different classes of differentiated cells, undifferentiated cells, and dead cells appear in the region of the cell which is a representative label. In this case, three types of markers MK1 to MK3 are input to three estimated regions ER1 to ER3 one by one. For example, the marker MK1 is input to the estimated region ER1 of the differentiated cells, the marker MK2 is input to the estimated region ER2 of the undifferentiated cells, and the marker MK3 is input to the estimated region ER3 of the dead cells.

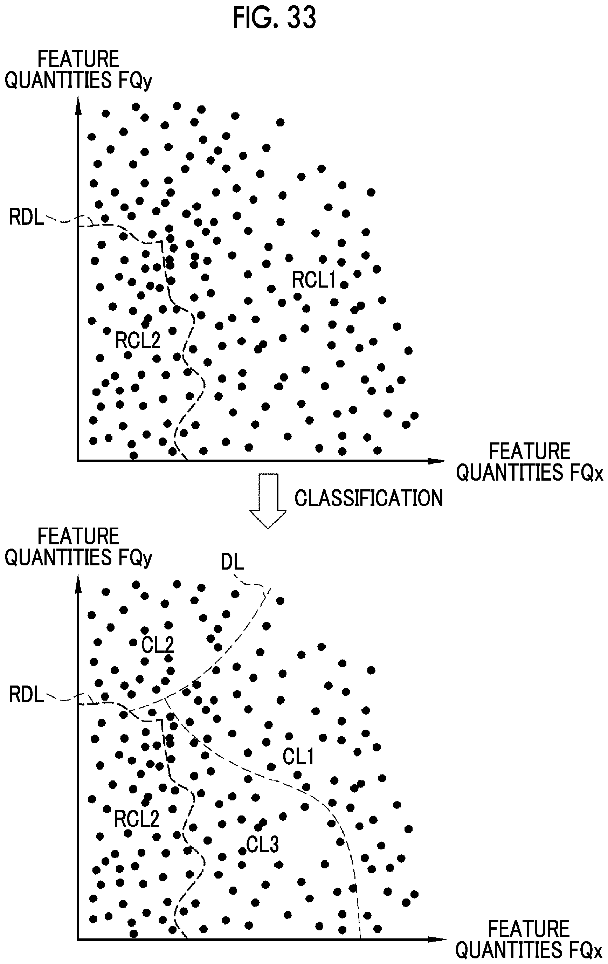

As illustrated in Fig. 33, the classification unit 49 classifies, according to the determination line DL, the representative cluster RCL into cluster CLs for at least the number of the estimated regions ERs which are estimated as different classes in the region of the representative label. As in the first embodiment, the classification unit 49 may perform classification based on only the feature quantities FQs of the partition PC corresponding to the marker MK among the feature quantities FQs of all the partitions PCs. Further, as in the second embodiment, the classification unit 49 may perform classification based on the feature quantities FQs of all the partitions PCs.

Fig. 33 illustrates an example in which the representative cluster RCL1 corresponding to the representative label of the cell is classified into three clusters CLs including a cluster CL1 corresponding to differentiated cells, a cluster CL2 corresponding to undifferentiated cells, and a cluster CL3 corresponding to dead cells.

As described above, in the third embodiment, as illustrated in Fig. 29, in the classification unit 49, a plurality of representative clusters RCLs corresponding to the representative labels are set in advance. As illustrated in Figs. 31 and 32, the display control unit 46 displays, on the display 34, the marker input screen 100 including the learning input image IIL in which the regions of the representative labels are represented so as to be identified. The reception unit 47 receives input of a marker MK for each of the plurality of estimated regions ERs which are estimated as different classes in the regions of the representative labels. Further, as illustrated in Fig. 33, the classification unit 49 classifies the representative cluster RCL into cluster CLs for at least the number of the estimated regions ERs.

Since the region of the representative label is already determined, it is not necessary to input a marker MK. Thus, it is possible to save time and effort for generating the annotation candidate image CAI. Further, the region of the representative label may be further divided into fine regions.

As illustrated in Fig. 30, since the cells and the culture medium correspond to most of the image MI in which the cells in culture appear and are set as the representative labels, it is possible to further save time and effort for generating the annotation candidate image CAI.

The input of the marker MK for modifying the region of the representative label may be received. For example, in a case where the region of the cells is erroneously recognized as the region of the culture medium, the input of the marker MK for setting the erroneously-recognized region of the culture medium to the region of the cells is received.

In a case of inputting the marker MK, a name of the corresponding label may also be input. Further, the marker MK may be input not to one point of the estimated region ER but to a partial region in the estimated region ER. For example, in a case where the input device 35 is a touch panel, the marker MK may be input to a partial region in the estimated region ER by using a touch pen or the like.

The hardware configuration of the computer including the image processing apparatus 10 may be modified in various ways. For example, the image processing apparatus 10 may be configured by a plurality of computers which are separated as hardware for the purpose of improving processing capability and reliability. Specifically, the functions of the display control unit 46 and the reception unit 47 and the functions of the calculation unit 48, the classification unit 49, and the generation unit 50 may be distributed to two computers. In this case, the image processing apparatus 10 is configured by two computers. Further, the functions of the image processing apparatus 10, the learning apparatus 11, and the operating apparatus 12 may be assigned to one computer.

In this way, the hardware configuration of the computer of the machine learning system 2 may be appropriately changed according to the required performance such as processing capability, safety, and reliability. Further, not only hardware but also the application program such as an operation program 40 may be duplicated or distributed and stored in a plurality of storage devices for the purpose of ensuring safety and reliability.

In each embodiment, the images MI of the phase-contrast microscope 70 in which cells in culture appear are exemplified as the input image II and the learning input image IIL, and the cells and the culture medium are exemplified as the classes. On the other hand, the present disclosure is not limited thereto. For example, magnetic resonance imaging (MRI) images may be used as the input image II and the learning input image IIL, and organs such as a liver and a kidney may be used as the classes.

The SEG model SM is not limited to U-Net, and may be another convolutional neural network, for example, SegNet.

In each embodiment, for example, as a hardware structure of the processing unit that executes various processing, such as the RW control unit 45, the display control unit 46, the reception unit 47, the calculation unit 48, the classification unit 49, the generation unit 50, and the transmission control unit 51, the following various processors may be used. The various processors include, as described above, the CPU 32 which is a general-purpose processor that functions as various processing units by executing software (an operation program 40), a programmable logic device (PLD) such as a field programmable gate array (FPGA) which is a processor capable of changing a circuit configuration after manufacture, a dedicated electric circuit such as an application specific integrated circuit (ASIC) which is a processor having a circuit configuration specifically designed to execute specific processing, and the like.

One processing unit may be configured by one of these various processors, or may be configured by a combination of two or more processors having the same type or different types (for example, a combination of a plurality of FPGAs and/or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as typified by system on chip (System On Chip: SoC), there is a form in which a processor that realizes the functions of the entire system including a plurality of processing units with one IC (Integrated Circuit) chip is used. As described above, the various processing units are configured by using one or more various processors as a hardware structure.

Further, as the hardware structure of the various processors, more specifically, an electric circuit (circuitry) in which circuit elements such as semiconductor elements are combined may be used.

From the above description, the invention described in following Appendix 1 can be understood.

### [Appendix 1]

An image processing apparatus including:
a display control processor configured to perform a control for displaying a learning input image which is input as learning data to a segmentation model for performing semantic segmentation, which determines a plurality of classes in an image in units of pixels;
a reception processor configured to receive, for each of a plurality of estimated regions which are estimated as different classes in the learning input image, an input of a marker having a size smaller than a size of the estimated region;
a calculation processor configured to calculate feature quantities for each of a plurality of partitions in the learning input image;
a classification processor configured to classify a plurality of the feature quantities for each of the plurality of partitions into clusters for at least the number of the estimated regions; and
a generation processor configured to generate an annotation candidate image in which a classification result of the clusters is reflected in the learning input image so as to be identified.

The technique of the present disclosure can also appropriately combine the various embodiments and the various modification examples. In addition, the technique of the present disclosure is not limited to each embodiment, and various configurations may be adopted without departing from the scope of the present disclosure. Further, the technique of the present disclosure extends to a program and a storage medium for non-temporarily storing the program.

The described contents and the illustrated contents are detailed explanations of a part according to the technique of the present disclosure, and are merely examples of the technique of the present disclosure. For example, the descriptions related to the configuration, the function, the operation, and the effect are descriptions related to examples of a configuration, a function, an operation, and an effect of a part according to the technique of the present disclosure. Therefore, it goes without saying that, in the described contents and illustrated contents, unnecessary parts may be deleted, new components may be added, or replacements may be made without departing from the spirit of the technique of the present disclosure. Further, in order to avoid complications and facilitate understanding of the part according to the technique of the present disclosure, in the described contents and illustrated contents, descriptions of technical knowledge and the like that do not require particular explanations to enable implementation of the technique of the present disclosure are omitted.

In this specification, "A and/or B" is synonymous with "at least one of A or B". That is, "A and/or B" means that only A may be included, that only B may be included, or that a combination of A and B may be included. Further, in this specification, even in a case where three or more matters are expressed by being connected using "and/or", the same concept as "A and/or B" is applied.

All documents, patent applications, and technical standards mentioned in this specification are incorporated herein by reference to the same extent as in a case where each document, each patent application, and each technical standard are specifically and individually described by being incorporated by reference.

## Claims

1. An image processing apparatus comprising:
a display control unit that performs a control for displaying a learning input image which is input as learning data to a segmentation model for performing semantic segmentation, which determines a plurality of classes in an image in units of pixels;
a reception unit that receives, for each of a plurality of estimated regions which are estimated as different classes in the learning input image, an input of a marker having a size smaller than a size of the estimated region;
a calculation unit that calculates feature quantities for each of a plurality of partitions in the learning input image;
a classification unit that classifies a plurality of the feature quantities for each of the plurality of partitions into clusters for at least the number of the estimated regions; and
a generation unit that generates an annotation candidate image in which a classification result of the clusters is reflected in the learning input image so as to be identified.

2. The image processing apparatus according to claim 1,
wherein the display control unit performs a control for displaying the annotation candidate image,
the reception unit receives a reinput of the marker in the annotation candidate image,
the classification unit reclassifies the feature quantities based on the reinput marker,
and the generation unit updates the annotation candidate image based on a result of the reclassification.

3. The image processing apparatus according to claim 1 or 2,
wherein the annotation candidate image is an image in which the partitions are colored according to the clusters to which the feature quantities belong.

4. The image processing apparatus according to any one of claims 1 to 3,
wherein the annotation candidate image is an image in which a boundary line for separating the partitions corresponding to the different clusters to which the feature quantities belong is drawn.

5. The image processing apparatus according to any one of claims 1 to 4,
wherein the classification unit performs the classification based on only the feature quantities of the partition corresponding to the marker, among the feature quantities of all the partitions.

6. The image processing apparatus according to any one of claims 1 to 4,
wherein the classification unit performs the classification based on the feature quantities of all the partitions.

7. The image processing apparatus according to any one of claims 1 to 6,
wherein a plurality of representative clusters corresponding to representative labels, which are labels of the representative classes in the learning input image, are set in advance in the classification unit.

8. The image processing apparatus according to claim 7,
wherein the display control unit performs a control for displaying the learning input image in which regions of the representative labels are represented so as to be identified,
the reception unit receives the input of the marker for each of the plurality of estimated regions which are estimated as the different classes in the regions of the representative labels, and
the classification unit classifies the representative clusters into clusters for at least the number of the estimated regions.

9. The image processing apparatus according to claim 7 or 8,
wherein the learning input image is an image in which cells in culture appear, and the representative labels are the cells and a culture medium of the cells.

10. The image processing apparatus according to any one of claims 1 to 9,
wherein the calculation unit calculates the feature quantities by using an encoder of a machine learning model.

11. The image processing apparatus according to claim 10,
wherein the learning input image is an image in which cells in culture appear, and
the machine learning model is a model that is learned using the image including a plurality of types of the cells.

12. The image processing apparatus according to claim 10 or 11,
wherein the learning input image is an image in which cells in culture appear, and
the machine learning model is a model that is learned using the images captured by different devices.

13. An operation method of an image processing apparatus, the method comprising:
a display control step of performing a control for displaying a learning input image which is input as learning data to a segmentation model for performing semantic segmentation, which determines a plurality of classes in an image in units of pixels;
a reception step of receiving, for each of a plurality of estimated regions which are estimated as different classes in the learning input image, an input of a marker having a size smaller than a size of the estimated region;
a calculation step of calculating feature quantities for each of a plurality of partitions in the learning input image;
a classification step of classifying a plurality of the feature quantities for each of the plurality of partitions into clusters for at least the number of the estimated regions; and
a generation step of generating an annotation candidate image in which a classification result of the clusters is reflected in the learning input image so as to be identified.

14. A computer-readable storage medium storing an operation program of an image processing apparatus, the program causing a computer to function as:
a display control unit that performs a control for displaying a learning input image which is input as learning data to a segmentation model for performing semantic segmentation, which determines a plurality of classes in an image in units of pixels;
a reception unit that receives, for each of a plurality of estimated regions which are estimated as different classes in the learning input image, an input of a marker having a size smaller than a size of the estimated region;
a calculation unit that calculates feature quantities for each of a plurality of partitions in the learning input image;
a classification unit that classifies a plurality of the feature quantities for each of the plurality of partitions into clusters for at least the number of the estimated regions; and
a generation unit that generates an annotation candidate image in which a classification result of the clusters is reflected in the learning input image so as to be identified.
